# EUROPEAN PATENT APPLICATION

(11) **EP 1 298 872 A2**
(43) Date of publication of application: **02.04.2003**
(21) Application number: 02256676.4
(22) Date of filing: 25.09.2002
(51) Int. Cl.: H04L 12/58, G06F 17/60

(54) **Managing messages in unified messaging systems**

(30) Priority: 28.09.2001 US 967860
(71) Applicant: Openwave Systems Inc., Redwood City, CA 94063 (US)
(72) Inventor: Clark, Jonathan, Holmdel, New Jersey 07733 (US)
(74) Representative: Browne, Robin Forsythe, Dr.

(57) **Abstract**

Techniques for managing messages in unified messaging systems are disclosed. Various message categories can be defined such that every message in the unified messaging system can be categorized under at least one category. The message category can, for example, include categories associated with types (or format) of the messages, as well as categories that are defined based on virtually any other criteria. In addition, rules can be defined for the message categories and associated with messages in the unified messaging system. Furthermore, techniques suitable for performing various operations on messages in the unified messaging system are disclosed. The operations can be performed based on the result of evaluation of rules with respect to messages in the unified messaging system. As will be appreciated, the techniques can be implemented to exercise better control over the overall management of the unified messaging system and the operations performed on the messages. These operations can, for example, include enforcing quotas and aging of the messages.

## Description

### Field Of The Invention

The present invention relates to messaging systems, and more particularly, to Unified Messaging Systems.

### Background Of The Invention

Recently, Unified Messaging Systems (or *UMS*) have become popular. Unified Messaging Systems can handle a variety of message types (or formats). As such, Unified Messaging Systems can handle voice, facsimile (fax), and regular text messages as objects in a single mailbox. The user can typically access the mail either be using a regular electronic mail (email) client or by using the telephone. The personal computer (PC) users can open and play back voice messages, assuming their PC has multimedia capabilities. In addition, the user can save faxes and/or print them. When the user accesses the same mailbox by telephone, ordinary email notes in text can be converted into audio files and played back. Unified messaging is particularly convenient for mobile business users because it allows them to reach colleagues and customers through a PC or telephone, whichever happens to be available. Some services offer worldwide telephone access.

Given the popularity of Unified Messaging Systems, extensive efforts have been made by a number of entities to develop Unified Messaging Systems which are capable of managing a variety of different message types. Unfortunately, however, conventional Unified Messaging Systems have some limitations. One problem is that it is difficult to manage messages in conventional Unified Messaging Systems. In other words, it is difficult to exercise control over various types of messages and numerous operations that are performed on them. For example, conventional Unified Messaging Systems typically only allow control over the total amount of storage ("quota") which means that storage (or reading) quotas are allocated without regard to message types. As a result, quota for storing and/or reading messages cannot be easily tailored in accordance with various user requirements. Another example of where better control over the unified messaging environment is highly desirable is when maintenance operations such as "aging" of the messages are performed. Typically, aging is frequently done to delete, archive, or move messages to offline storage and so on. Typically, aging operation are performed on older messages. These operations can, for example, be performed based on message timestamps.

In view of the foregoing, there is a need for improved techniques for managing messages in unified messaging environments.

### SUMMARY OF THE INVENTION

Broadly speaking, the invention relates to techniques for managing messages in unified messaging systems. In accordance with one aspect of the invention, various message categories can be defined such that messages in the unified messaging system can be categorized under at least one category. The message categories can, for example, include categories associated with types (or formats) of the messages, as well as categories that are defined based on virtually any other criteria. These classifications can, for example, include message self-classification, classifications made based on the source of the message, and so on. In addition, rules can be defined for the message categories and associated with messages in the unified messaging system.

Other aspects of the invention provide techniques suitable for performing various operations on messages in the unified messaging system. The operations can be performed based on the result of evaluation of rules with respect to messages in the unified messaging system. As will be appreciated, the techniques can be implemented to exercise better control over the overall management of the unified messaging system and the operations performed on the messages. These operations can, for example, include enforcing quotas and aging of the messages.

The invention can be implemented in numerous ways, including as method, system, and a computer readable medium. Several embodiments of the invention are discussed below.

As a method of processing messages in a unified messaging system, one embodiment of the invention includes the acts of: determining whether at least one rule has been defined for one or more messages in the unified messaging system; evaluating at least one rule defined for the one or more messages when it is determined that at least one rule has been defined for the message; and taking appropriate action based on the evaluating of the at least one rule. The at least one rule is associated with at least one predefined category of messages in the unified messaging system.

As a method of storing messages in a unified messaging system, one embodiment of the invention includes the acts of: identifying a message that is to be stored in the unified messaging system; determining one or more message categories for the message; determining whether one or more rules have been defined for the one or more message categories; evaluating at least one rule associated with the one or more message categories when it is determined that one or more rules have been defined; and storing the message in the unified messaging system based on the evaluating.

As a method of aging messages in a unified messaging system, one embodiment of the invention includes the acts of: identifying a message in the unified messaging system; determining one or more message categories for the message; determining whether one or more aging rules have been defined for the one or more message categories; evaluating at least one aging rule associated with the one or more message categories when it is determined that one or more rules have been defined; and aging the message in the unified messaging system based on the result of the evaluation.

As a unified messaging system one embodiment of the invention can operate to: determine whether at least one rule has been defined for one or more messages in the unified messaging system; evaluate at least one rule defined for the one or more messages when it is determined that at least one rule has been defined for the message; taking appropriate action based on the result of the evaluation. The at least one rule is associated with at least one predefined category of messages in the unified messaging system.

As a computer readable medium including computer program code for processing messages in a unified messaging system, one embodiment of the invention includes: computer program code for determining whether at least one rule has been defined for one or more messages in the unified messaging system; computer program code for evaluating at least one rule defined for the one or more messages; and computer program code for taking appropriate action based on the result of the evaluation. The at least one rule is associated with at least one predefined category of messages in the unified messaging system.

The advantages of the invention are numerous. Different embodiments or implementations may have one or more of the following advantages. One advantage is that the invention can be implemented to provide better control over the management of the unified messaging systems and the operations performed by them. Another advantage is that the invention does not limit the ability of the users to tailor unified messaging systems. Yet another advantage is that the invention can be implemented by incorporating components of unified messaging systems that are readily available and/or already in use. Still another advantage of the invention is that messages can be stored on mediums best suited for their content.

Other aspects and advantages of the invention will become apparent from the following detailed description, taken in conjunction with the accompanying drawings, illustrating by way of example the principles of the invention.

### BRIEF DESCRIPTION OF THE DRAWINGS

The present invention will be readily understood by the following detailed description in conjunction with the accompanying drawings, wherein like reference numerals designate like structural elements, and in which:
Fig. 1 illustrates a unified messaging environment in accordance with one embodiment of the invention.
Fig. 2 illustrates a message managing method for managing messages of a unified messaging system in accordance with one embodiment of the invention.
Fig. 3 illustrates a message processing method for processing a message in a unified messaging system in accordance with one embodiment of the invention.
Fig. 4 illustrates a message storing method for storing messages based on quotas defined in a unified messaging system in accordance with one embodiment of the invention.
Fig. 5 illustrates a few rules defined for various categories of messages in a unified messaging system.
Fig. 6 illustrates counts maintained for folders of a mailbox in a unified messaging system in accordance with one embodiment of the invention.
Figs. 7A and 7B illustrate an aging method in accordance with one embodiment of the invention.

### DETAILED DESCRIPTION OF THE INVENTION

The invention pertains to techniques for managing messages in unified messaging systems. In accordance with one aspect of the invention, various message categories can be defined such that messages in the unified messaging system can be categorized under at least one category. The message categories can, for example, include categories associated with types (or format) of the messages, as well as categories that are defined based on virtually any other criteria. In addition, rules can be defined for the message categories and associated with messages in the unified messaging system.

Other aspects of the invention provide techniques suitable for performing various operations on messages in the unified messaging system. The operations can be performed based on the result of evaluation of rules with respect to messages in the unified messaging system. As will be appreciated, the techniques can be implemented to exercise better control over the overall management of the unified messaging system and the operations performed on the messages. These operations can, for example, include enforcing quotas and aging of the messages.

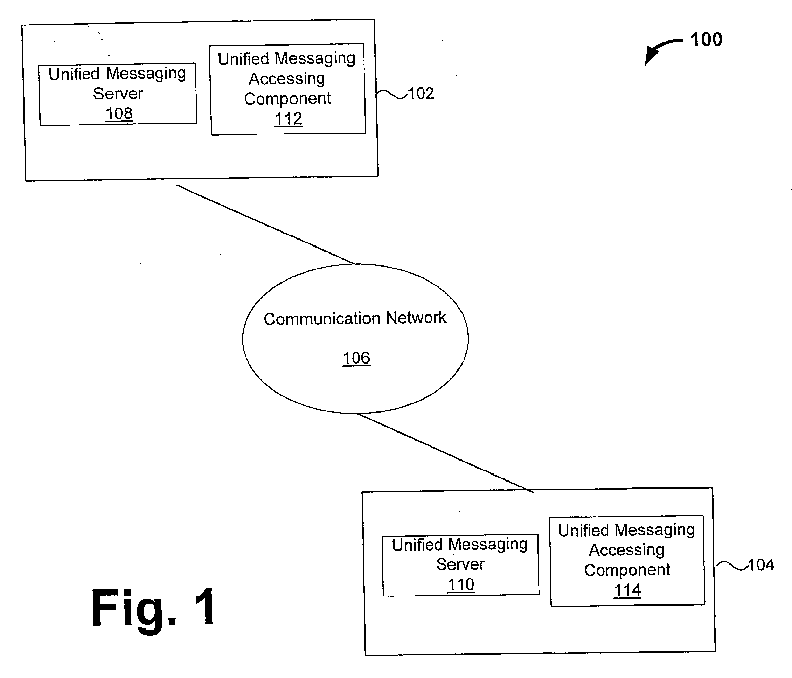

Embodiments of the invention are discussed below with reference to Figs. 1-7B. However, those skilled in the art will readily appreciate that the detailed description given herein with respect to these figures is for explanatory purposes as the invention extends beyond these limited embodiments.

Fig. 1 illustrates a unified messaging environment 100 in accordance with one embodiment of the invention. The unified messaging environment 100 includes unified messaging systems (or components) 102 and 104. The unified messaging systems 102 and 104 can exchange messages via a computer network 106. The computer network 106 may be or include, for example, the Internet, one or more campus intranets, local area networks (LANs), wide area networks (WANs), or wireless telecommunication networks, e.g., a cellular digital packet data (CDPD) network, a global system for mobile (GSM) communications network, a time division multiple access (TDMA) network, a personal digital cellular (PDC) network, or a personal handy-phone system (PHS) network.

As shown in Fig. 1, the unified messaging systems 102 and 104 respectively include unified messaging servers 108 and 110. As will be appreciated by those skilled in the art, each of the unified messaging servers 108 and 110 can, for example, be implemented as an extension of a Message User Agent (MUA) operating in an electronic mailing environment. Accordingly, the unified messaging servers 108 and 110 have additional functionality to support various devices (e.g., telephones, wireless devices, fax machines, etc.) interchanging various types of messages (e.g., email, voice, fax, video, etc.).

The unified messaging systems 102 and 104 also include unified messaging accessing components 112 and 114 which provide a mechanism for accessing messages (e.g., write, read, transfer, etc.). As will be appreciated by those skilled in the art, each of the unified accessing components 112 and 114 can, for example, be implemented as a POP server, IMAP server, Message Transfer Agent (MTA), an Application Program Interface (API), etc.

It should be noted that the unified messaging systems 102 and 104 typically have the capability of storing messages. For example, in cases when a unified messaging accessing component is implemented as a Message Transfer Agent (MTA), a Message Store (MSS) can be used to store the messages. Accordingly, all the mailboxes can be stored, for example, in the Message Store. Typically, a mailbox is associated with a user (or group) and includes one or more folders. There can be several subfolders under a mailbox folder, and so on. It should also be noted that a directory (not shown) can also be used to store information related to the messaging system. This information can, for example, include names, passwords, quotas, etc.

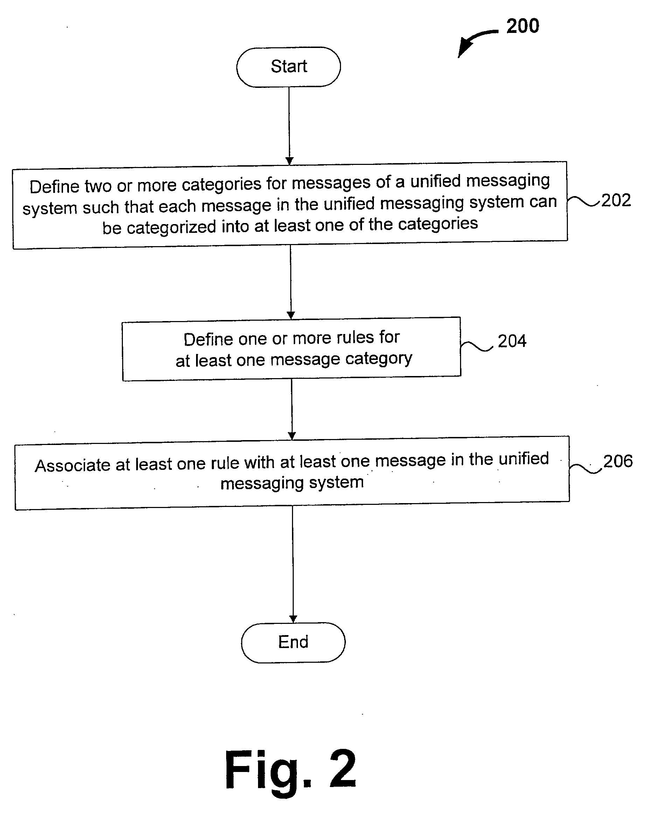

As will be appreciated, in contrast to conventional systems, the unified messaging systems 102 and 104 allow for better management of messages exchanged in the unified messaging environment 100. Fig. 2 illustrates a message managing method 200 for managing messages of a unified messaging system in accordance with one embodiment of the invention. The message managing method 200 can, for example, be performed by the unified messaging system 102 or 104 of Fig. 1. Initially, at operation 202, two or more categories are defined for messages of the unified messaging system such that each message in the unified messaging system can be categorized into at least one category. Message categories can, for example, be defined based on the type (e.g., format) of the messages which are encountered in the unified messaging system (e.g., email, voice mail, fax, etc.). In addition, other categories can be defined based on virtually any other criteria (e.g., urgent, personal, classified, small, large, etc.). In any case, two or more categories are defined such that each message in the unified messaging system can be categorized into at least one category. It should be noted that it may be possible to categorize a message into two or more categories (e.g., a large, urgent voice message). The operation 202 can, for example, be performed at least partially based on input provided by a system administrator of the unified messaging system.

Next, at operation 204, one or more rules are defined for at least one message category. As will be discussed below, a rule can be defined for all messages in a category (e.g., do not store voice mail messages that exceed a certain size). In addition, it is also possible to define a rule such that it is only applicable to a subset of messages and/or applies to messages in one or more categories (e.g., no voice mail from Mike dated after a certain date which exceeds a certain size unless the message is marked personal). Finally, at operation 206, at least one message in the unified messaging system is associated with at least one of the rules defined at operation 204. The message managing system 200 ends following operation 206.

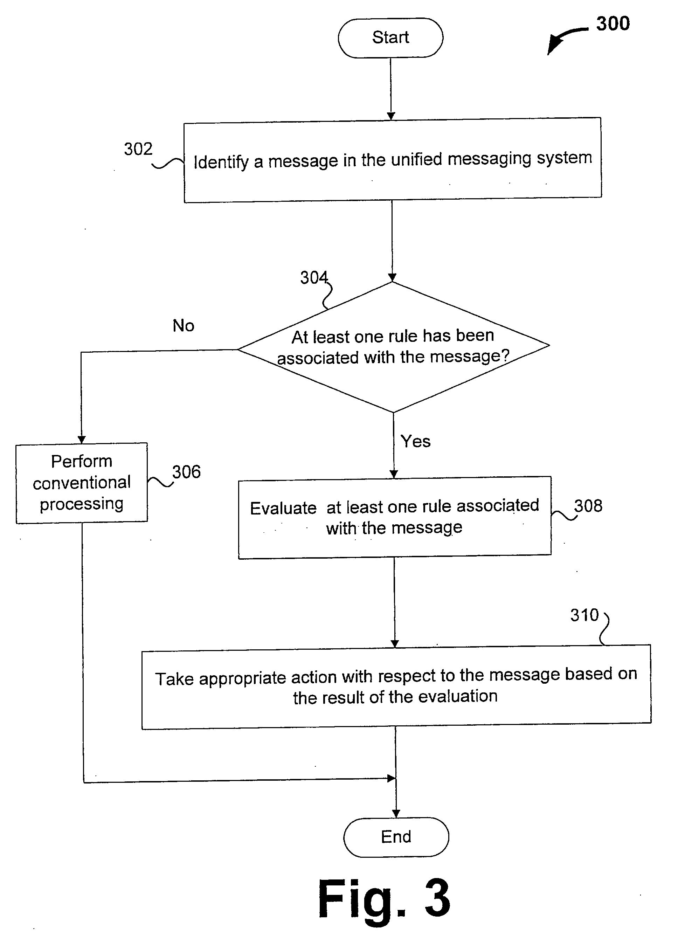

As will be appreciated, associating a message with one or more rules which have been defined based on at least one message category provides several advantages. One advantage is that better control can be exercised with respect to actions that are taken with the message. Fig. 3 illustrates a message processing method 300 for processing a message in a unified messaging system in accordance with one embodiment of the invention. Initially, at operation 302, a message in the unified messaging system is identified. Next, at operation 304, a determination is made as to whether at least one rule has been associated with the message. If it is determined at operation 304 that at least one rule has not been associated with the message, the message processing method 300 proceeds to operation 306 where conventional processing can be performed. The message processing method 300 ends following operation 306.

On the other hand, if it is determined at operation 304 that at least one rule has been associated with the message, the message processing method 300 proceeds to operation 308 where at least one rule which is associated with the message is evaluated. Thereafter, at operation 310, appropriate action is taken with respect to the message based on the result of the evaluation performed at operation 308. The message processing method 300 ends following operation 310.

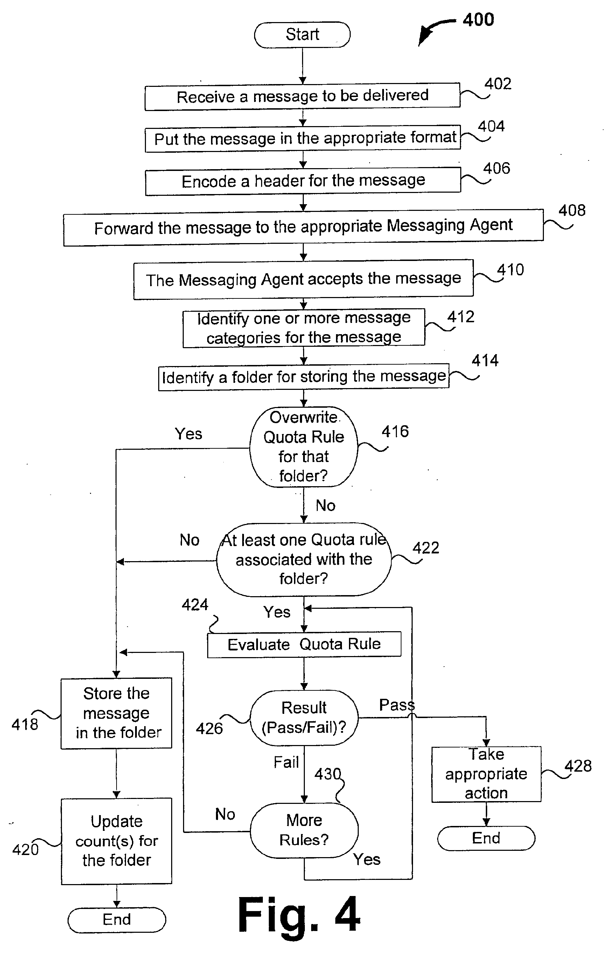

As noted above, rules defined based on one or more message categories can be associated with one or more operations which can be performed on the message. One such operation is storing messages in a unified messaging system based on quotas (or limits). Fig. 4 illustrates a message storing method 400 for storing messages in a unified messaging system in accordance with one embodiment of the invention. Initially, at operation 402, a message that is to be delivered is received. The message is typically received by a messaging server (e.g., a voice messaging server). Next, at operation 404, the message is put into the appropriate format (e.g., a .wav file for a voice message). A header for the message is encoded at operation 406. The encoding can, for example, be a Multi-purpose Internet Mail Extension (MIME). As will be appreciated, the encoded header can, among other things, specify one or more categories for the message. Next, at operation 408, the message is forwarded to the appropriate messaging agent (e.g., Messaging Transfer Agent (MTA)). The message can, for example, be forwarded via a Transmission Control Protocol (TCP) connection using a Simple Mail Transfer Protocol (SMTP).

After the message has been forwarded, the message is accepted by the messaging agent at operation 410. Thereafter, at operation 412, one or more categories for the message are identified. As will be appreciated, the encoded message header can, for example, be used to identify one or more categories for the message. It should be noted that the message category can be determined based on other criteria (e.g., address of the sender, the messaging server used to forward the message, etc.). In any case, at operation 414 a folder for storing the message is identified. It should also be noted that folders can be arranged based on various categories. In other words, for each defined category there is a folder which contains only messages of the category associated with the folder (e.g., a voice folder which contains only voice messages).

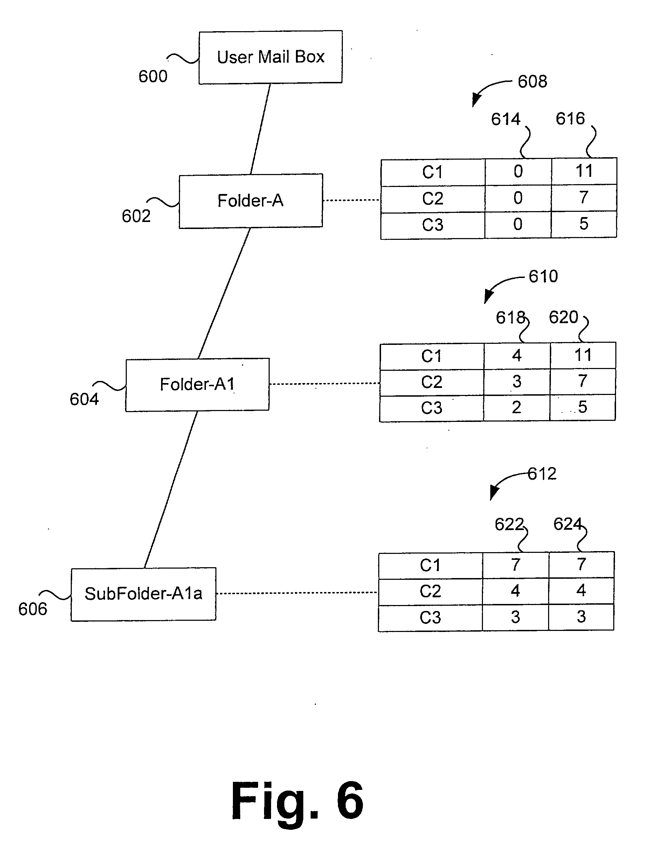

After the appropriate folder for storing the message has been identified, the message storing method 400 proceeds to operation 416 where a determination is made as to whether the quota rule should be overruled for that folder. As will be appreciated, in some cases it may be desirable to overwrite rules that typically apply to all folders or all messages or messages in one category. By way of example, there may be a general rule that the total number of messages in a user's mailbox is not to exceed a certain number. However, it may desirable to allow certain messages (e.g., voice messages) to be stored in a particular folder (e.g., voice folder) even if the limit for the total number of messages would be exceeded. Accordingly, the folder can be assigned virtually unlimited storage space by overwriting the rule. Therefore, if it is determined at operation 416 that quota rules have been overruled for that folder, the message storing method 400 proceeds to operation 418 where the message is stored in the folder. Thereafter, at operation 420, the count for that folder is updated. Updating operation 420 will be described below with reference to Fig. 6. The message storing method 400 ends following operation 420.

On the other hand, if it is determined at operation 416 that quota rules are not to be overwritten for that folder, the message storing method 400 proceeds to operation 422 where a determination is made as to whether at least one quota rule has been defined for that folder. If it is determined at operation 422 that no quota rule has been defined for the folder, the message storing method 400 proceeds to operation 418 where the message is stored in the folder. Thereafter, at operation 420, the count for that folder is updated. The message storing method 400 ends following operation 420.

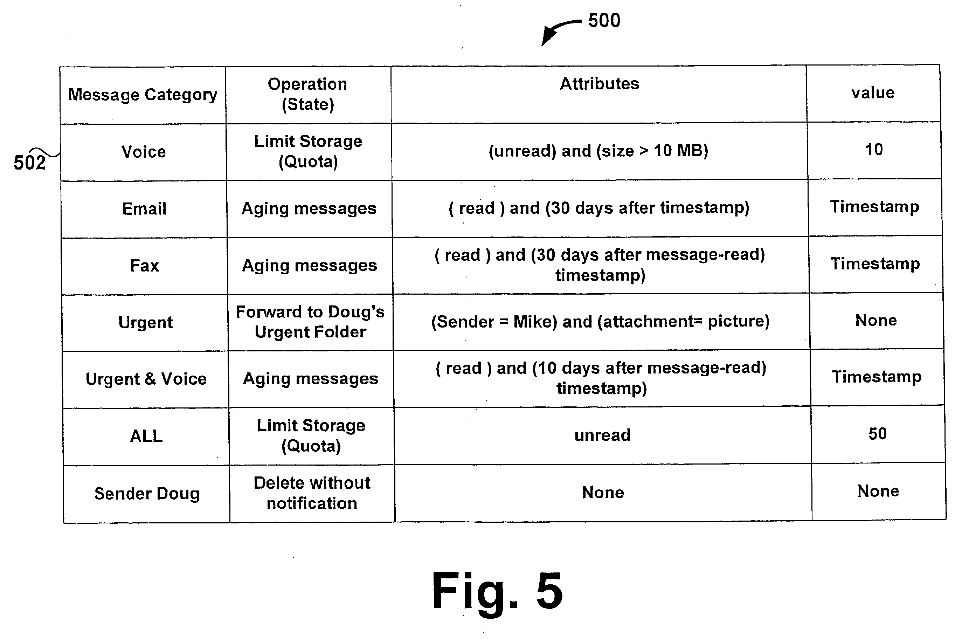

However, if it is determined at operation 422 that at least one quota rule has been defined for the folder, the message storing method 400 proceeds to operation 424 where the quota rule is evaluated. Generally, a rule defined for a category can have an associated operation (or state), one or more attributes and one or more values. By way of example, a quota rule may specify that voice messages that are "unread" and have a size greater than 10 Mega Bytes (MB) should be limited to a maximum of 10 messages. In other words, the quota for storage of such messages in the folder is set to be 10 messages. This rule is illustrated in Fig. 5. Fig. 5 illustrates a few rules defined for various categories of messages in a unified messaging system. Referring now to Fig. 5, a rule 502 has been defined for the category of voice messages. Rule 502 has been defined for the category of voice messages with respect to the operation (or state) of limiting storage (quota). In addition, attributes have been specified for the rule 502, namely, the voice messages that are "unread" and have a "size which is greater than 10 MB." Finally, a value "10" specifies the limit for voice messages that meet these criteria.

Referring back to Fig. 4, after the rule has been evaluated, the message storing method 400 proceeds to operation 426 where it is determined whether the rule has been evaluated to pass or fail. If it is determined at operation 426 that the rule has been evaluated to pass (i.e., applicable to the message), the message storing method 400 proceeds to operation 428 where appropriate action is taken (e.g., an error message is generated, a notification is made, the message is stored in another folder, etc.) The message storing method 400 ends following operation 428. However, if it is determined at operation 426 that the rule has been evaluated to fail (i.e., not applicable to the message), the message storing method 400 proceeds to operation 430 where a determination is made as to whether there are more rules to evaluate. If it is determined at operation 430 that there are no rules to evaluate, the message storing method 400 proceeds to operation 418 where the message is stored in the folder. Thereafter, at operation 420, the count for that folder is updated. The message storing method 400 ends following operation 420. However, if is determined at operation 430 that there is at least one rule to be evaluated, the message storing method 400 proceeds to operation 424 where the rule is evaluated. Thereafter, the message storing method 400 proceeds in a similar manner as described above. The message storing method 400 ends either following the operation 428 or after the updating performed at operation 420.

The updating performed at operation 420 operates to update one or more counts which are maintained for the folder. To elaborate, Fig. 6 illustrates counts maintained for folders of a mailbox in a unified messaging system in accordance with one embodiment of the invention. Referring now to Fig. 6, a user mailbox 600 is depicted with a folder-A 602, a subfolder-A1 604 and its subfolder-A1a 606. As shown in Fig. 6, counts 608, 610 and 612 are respectively associated with folder A-602 and subfolders 604 and 606. Each of the counts 608, 610 and 612 denotes in the first column (614, 618 and 622) the number of messages of each category that are stored in a folder or subfolder. For example, column 622 of the count 612 indicates that 7, 4 and 3 messages are respectively stored for categories C1, C2, and C3. In addition, each of the counts 608, 610 and 612 denotes in the second column (616, 620 and 624) the accumulative count for the folder or subfolder. For example, the column 620 of the count 610 indicates that the accumulative counts of messages for categories C1, C2 and C3 are respectively 11, 7 and 5. Accordingly, the accumulative count of column 620 takes into account the messages stored both in subfolder A1-604 and its subfolder-A1a 606.

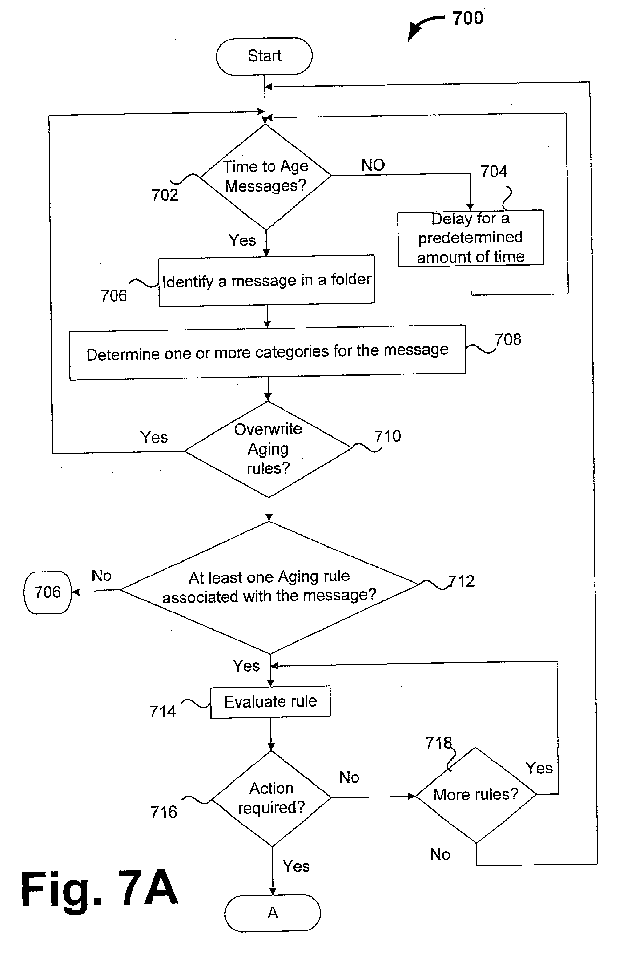

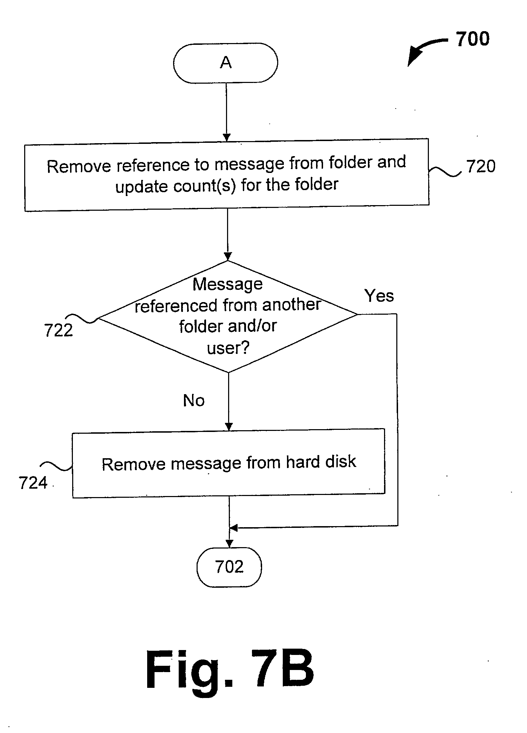

As noted above, rules for categories can be defined with respect to various operations that can be performed on messages in a unified messaging system. One such operation is aging messages. Figs. 7A and 7B illustrate an aging method 700 in accordance with one embodiment of the invention. Initially, at operation 702, a determination is made as to whether it is time to age messages. If it is determined at operation 702 that it is not time to age messages, the aging method 700 proceeds to operation 704 where a delay is performed for a predetermined amount of time. After the delay, the aging method 700 proceeds to operation 702 where a determination is made as to whether it is time to age a message.

If it is determined at operation 702 that it is time to age the messages, the aging method 700 proceeds to operation 706 where a message in a folder is identified. Next, at operation 708, one or more categories are determined for the message. Thereafter, it is determined at operation 710 whether rules should be overwritten. If it is determined at operation 710 that aging rules should be overwritten, the aging method 700 proceeds to operation 702 where a determination is made as to whether it is time to age messages. However, if it is determined at operation 710 that rules should not be overwritten, the aging method 700 proceeds to operation 706 where a message in the folder has been identified. If it is determined at operation 712 that no rules are associated with the message, the aging method 700 proceeds to operation 702 where a determination is made as to whether it is time to age messages.

On the other hand, if it is determined at operation 712 that at least one rule is associated with the message, the aging method 700 proceeds to operation 714 where the rule is evaluated. Next, at operation 716, a determination is made as to whether an action is required. If it is determined at operation 716 that no action is required, the aging method 700 proceeds to operation 718 where it is determined whether more rules need to be evaluated. If it is determined at operation 718 that no more rules need to be evaluated, the aging method 700 proceeds to operation 702 where a determination is made as to whether it is time to age messages.

On the other hand, if it is determined at operation 718 there is at least one rule to be evaluated, the aging method 700 proceeds to operation 714 where the rule is evaluated. Thereafter, the aging method 700 proceeds to operation 716 where it is determined whether action is required. If it is determined at operation 716 that action is required, the aging method 700 proceeds to operation 720 of FIG. 7B where the reference to the message is removed from the folder and the count for the folder is updated. Next, at operation 722, a determination is made as to whether the message is referenced from another folder. If it is determined that the message is not referenced from another folder, the aging method 700 proceeds to operation 724 where the message is removed from memory. However, if it is determined at operation 722 that the message is referenced from another folder, operation 724 is bypassed. In any case, the method 700 proceeds to operation 702 where it is determined whether it is time to age messages.

Appendix A illustrates rules defined for various folders and subfolders in accordance with one embodiment of the invention. In the described embodiment, rules have been associated with folders and/or subfolders. For example, referring to the "/inbox" folder, rules have been defined for categories "email," "voice," "fax," and "urgent." It should be noted that rules have also been defined which apply to all categories ("all").

The invention can use a combination of hardware and software components. The software can be embodied as computer readable code (or computer program code) on a computer readable medium. The computer readable medium is any data storage device that can store data which can thereafter be read by a computer system. Examples of the computer readable medium include read-only memory, random-access memory, CD-ROMs, magnetic tape, and optical data storage devices. The computer readable medium can also be distributed over network-coupled computer systems so that the computer readable code is stored and executed in a distributed fashion.

The many features and advantages of the present invention are apparent from the written description, and thus, it is intended by the appended claims to cover all such features and advantages of the invention. Further, since numerous modifications and changes will readily occur to those skilled in the art, it is not desired to limit the invention to the exact construction and operation as illustrated and described. Hence, all suitable modifications and equivalents may be resorted to as falling within the scope of the invention.

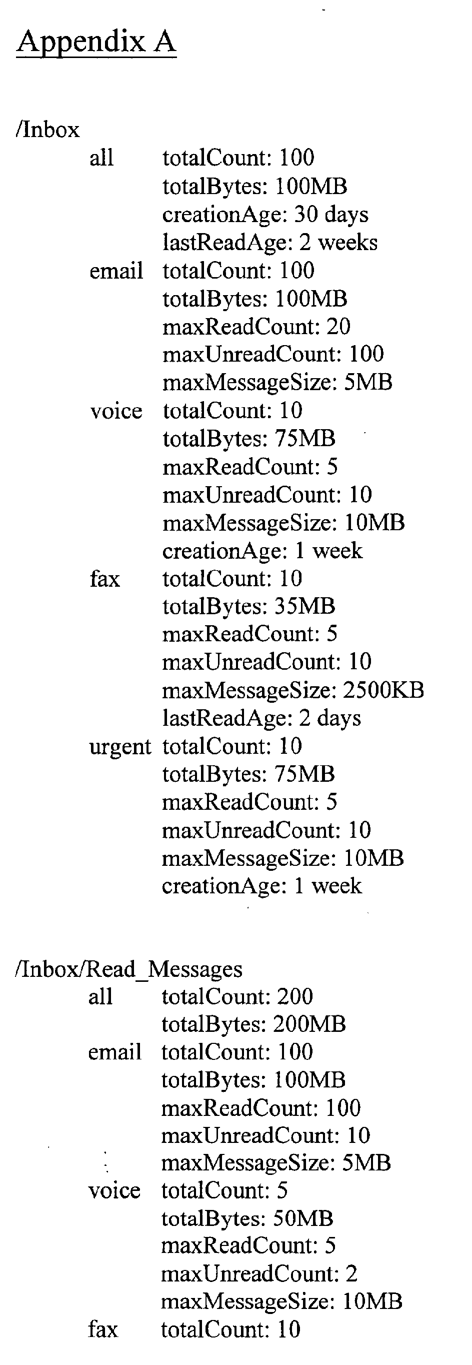

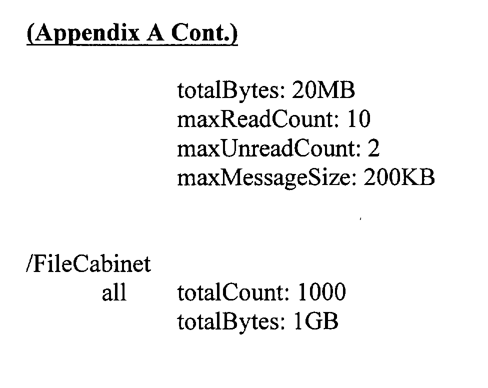

## Claims

1. A method of processing messages in a unified messaging system, said method comprising:
determining whether at least one rule has been defined for one or more messages in said unified messaging system;
evaluating at least one rule defined for said one or more messages when said determining determines that at least one rule has been defined for said message;
taking appropriate action based on said evaluating of said at least one rule;
wherein said at least one rule is associated with at least one predefined category of messages in said unified messaging system; and
wherein said message is stored or scheduled to be stored in said unified messaging system.

2. A method as recited in claim 1,
wherein said at least one rule has been defined with respect to one or more operations that can be performed on said one or more messages, and
wherein said taking of appropriate action comprises:
performing one or more operations on said one or more messages based on the result of said evaluating.

3. A method as recited in claim 2, wherein said one or more operations include operations performed with respect to implementing quotas or aging of said one or more messages.

4. A method as recited in claim 1, wherein said method further comprises:
defining two or more categories for said unified messaging system such that messages in said unified messaging system can be categorized into at least one of said two or more categories;
defining at least one rule based on at least one message category; and
associating at least one message in said messaging system with at least one rule.

5. A method as recited in claim 4, wherein said at least one rule is associated with at least one mail folder, mail subfolder, or mailbox.

6. A method as recited in claim 4, wherein said at least one rule is defined with respect to an operation and one or more attributes.

7. A method as recited in claim 1, wherein said one or more rules are associated with providing storage quotas or reading quotas.

8. A method as recited in claim 7,
wherein said method further comprises:
determining at least one folder suitable for storage of said message, and
wherein one or more rules are associated with said at least one folder.

9. A method as recited in claim 8,
wherein said method further comprises:
determining at least one folder where said message is to be stored or read,
wherein said one or more rules are associated with said at least one folder, and
wherein said at least one folder has been designated to store only messages of one or more categories.

10. A method as recited in claim 9,
wherein said one or more categories indicate the message types; and
wherein folders are arranged to hold only messages of a single type.

11. A method as recited in claim 10, wherein said message types can be voice, email, video, or fax.

12. A method as recited in claim 10, wherein said method further comprises:
updating one or more counts for said at least one folder.

13. A method as recited in claim 12,
wherein said one or more counts indicate the number of messages for each category that are stored in said at least one folder.

14. A method as recited in claim 13, wherein said one or more counts also indicate the number of messages for each category that are stored in at least one subfolder of said at least one folder.

15. A method of aging messages in a unified messaging system, said method comprising:
identifying a message in said unified messaging system;
determining one or more message categories for said message;
determining whether one or more aging rules have been defined for said one or more message categories;
evaluating at least one aging rule associated with said one or more message categories when said determining determines that one or more rules have been defined; and
aging said message in said unified messaging system based on said evaluating.

16. A method as recited in claim 15,
wherein said at least one rule has been associated with at least one folder, and
wherein said at least one folder has been designated to store only messages of said one or more categories.

17. A method as recited in claim 16, wherein said message types can be voice, email, video, or fax.

18. A unified messaging system, wherein said unified messaging system can operate to:
determine whether at least one rule has been defined for one or more messages in said unified messaging system;
evaluate at least one rule defined for said one or more messages when said determining determines that at least one rule has been defined for said message;
take appropriate action based on said evaluating of said at least one rule; and
wherein said at least one rule is associated with at least one predefined category of messages in said unified messaging system.

19. A unified messaging system as recited in claim 18,
wherein said at least one rule has been defined with respect to one or more operations that can be performed on said one or more messages, and
wherein said taking of appropriate action comprises:
performing one or more operations on said one or more messages based on the result of said evaluation.

20. A unified messaging system as recited in claim 19, wherein said one or more operations include operations performed with respect to implementing quotas or aging of said one or more messages.

21. A computer readable medium including computer program code for processing messages in a unified messaging system, the computer readable media comprising:
computer program code for determining whether at least one rule has been defined for one or more messages in said unified messaging system;
computer program code for evaluating at least one rule defined for said one or more messages when said determining determines that at least one rule has been defined for said message;
computer program code for taking appropriate action based on said evaluating of said at least one rule; and
wherein said at least one rule is associated with at least one predefined category of messages in said unified messaging system.
